# EUROPÄISCHE PATENTANMELDUNG

(11) **EP 0 564 870 A1**
(43) Veröffentlichungstag der Anmeldung: **13.10.1993**
(21) Anmeldenummer: 93104454.9
(22) Anmeldetag: 18.03.1993
(51) Int. Cl.: E03F 5/14, E02B 8/02, B01D 29/03, B01D 29/64, B01D 29/82

(54) **Vorrichtung zum Entfernen von Abscheidegut aus einer Flüssigkeit mit einer zylindermantelförmigen, flüssigkeitsdurchlässigen Abscheidefläche**

(30) Priorität: 07.04.1992 DE 4211659
(71) Anmelder: Huber, Hans-Georg, D-92334 Berching (DE)
(72) Erfinder: Huber, Hans-Georg, D-92334 Berching (DE)
(74) Vertreter: Rehberg, Elmar, Dipl.-Ing.

(57) **Zusammenfassung**

Eine Vorrichtung (1) zum Entfernen von Abscheidegut aus einer Flüssigkeit mit einer zylindermantelförmigen, flüssigkeitsdurchlässigen Abscheidefläche (7), mit einer Schneckenfördereinrichtung (9) sieht vor, daß das Gehäuse (2) der Schneckenfördereinrichtung (9) anströmseitig die Abscheidefläche (7) umschließt und anströmseitig in einen Einlaufstutzen (3) übergeht. Ein sich in der Kompaktierzone (16) bildender Pfropf (17) aus Abscheidegut ist beim Auftreten von Druck in der Flüssigkeit als Dichtelement für den Abschluß der Förderstrecke nach oben vorgesehen. Der flüssigkeitsdurchlässigen Abscheidefläche (7) ist ein flächig ausgebildeter Regulierungskörper (23) zugeordnet, der ortsveränderlich zur Abscheidefläche (7) vorgesehen ist, um die Durchtrittsfläche der Abscheidefläche (7) zu verändern und damit eine Durchsatzregulierung zu erzielen.

## Beschreibung

Die Erfindung bezieht sich auf eine Vorrichtung zum Entfernen von Abscheidegut aus einer Flüssigkeit mit einer Zylindermantelförmigen, flüssigkeitsdurchlässigen Abscheidefläche, die zur Ablagerung des Abscheideguts auf ihrer Innenseite anströmseitig auf einem Teil des Umfangs offen ausgebildet ist, und mit einer parallel zur Abscheidefläche angeordneten, zur Abwurfstelle des Abscheideguts führenden, als Schneckenfördereinrichtung mit Gehäuse, Welle und Förderwendel ausgebildeten Förderstrecke für das Abscheidegut, wobei die Förderwendel an der Abscheidefläche entlangstreichend das Abscheidegut abnimmt, nach oben fördert und so die Abscheidefläche immer wieder reinigt sowie am oberen Ende der Förderstrecke eine Kompaktierzone für das Abscheidegut gebildet ist. Diese Vorrichtung kann insbesondere in Kläranlagen eingesetzt werden, ist jedoch auch vorteilhaft für andere Bereiche der Technik verwendbar, beispielsweise der Textilindustrie, der Kunststoffindustrie, in Schlachthöfen u. dgl., und zwar immer dann, wenn ein Abscheidegut in mehr oder weniger fester Form aus einer Flüssigkeit, insbesondere Wasser, herausgeholt werden soll. Bei dem Abscheidegut kann es sich um Rechenund/oder Siebgut handeln, also um Gut, welches auch relativ grobstückig anfallt. Andererseits kann das Abscheidegut aber auch eine relativ feine Konsistenz aufweisen, wie beispielsweise ein Filtergut.

Eine Vorrichtung der eingangs beschriebenen Art zum Entfernen von Rechen- und/oder Siebgut aus in einem Gerinne strömender Flüssigkeit ist aus der DE-PS 37 16 434 bekannt. Die Vorrichtung weist einen bis zur Sohle des Gerinnes reichenden, schräg aufwärts gerichteten, teilweise in die Flüssigkeit eintauchenden, zylindermantelförmigen Rost mit durchgehenden Roststäben und zwischen diesen gebildeten Längsspalten auf, der hier die Abscheidefläche bildet. Parallel zum Rost ist eine als Schneckenfördereinrichtung mit Gehäuse, Welle und Förderwendel ausgebildete Förderstrecke für das Abscheidegut vorgesehen. Die Abscheidung des Abscheideguts erfolgt an der inneren Oberfläche der Abscheidefläche, also auf der Seite, an der auch die Förderwendel immer wieder entlangstreicht. Die bekannte Vorrichtung wird in einem Gerinne, also in einem offenen System, eingesetzt. Da sich die Abwurfstelle oberhalb des Flüssigkeitsspiegels im Gerinne befindet, kann sich im Bereich der nach oben fördernden Förderstrecke kein Flüssigkeitsdruck aufbauen. Am Ende der Förderstrecke ist in einem Bereich, der frei von einer Förderwendel ist, eine Kompaktierzone gebildet, in welcher sich das Abscheidegut anreichert bzw. Zusammengepreßt wird, um noch weitere Flüssigkeit aus dem Abscheidegut herauszupressen. Das Abscheidegut gelangt dann über eine Abwurfschurre aus dem Gehäuse der Förderstrecke heraus und wird beispielsweise in einen Container abgeworfen. Die bekannte Vorrichtung ist nur in einem offenen Kanalsystem anwendbar.

Es gibt jedoch auch Fälle, in denen ein teilweise geschlossanes Kanalsystem vorliegt, beispielsweise der Ablauf aus einem Regenrückhaltebecken in ein offenes Gerinne, das dem Transport der mit dem Abscheidegut verunreinigten Flüssigkeit dient. In einem solchen Kanalsystem kann die Flüssigkeit auch unter Druck stehen, wobei hier insbesondere der Druck infolge eines Höhenunterschieds angesprochen ist. Ein solcher Druck liegt beispielsweise dann vor, wenn ein Sammelbecken in einem Ablauf endet und der Flüssigkeitsspiegel in dem Sammelbecken höher ist als im Ablauf. In einem solchen Kanalsystem ist die Flüssigkeit ebenfalls durch Abscheidegut verschmutzt, welches in Form von Fett, Laub, Steinen oder sonstigen Stoffen vorliegen kann.

Diese Abscheidegüter lagern sich auch im Ablauf ab und können die Ursache für Betriebsstörungen nicht nur in den Leitungen und Gerinnen, sondern auch in nachgeschalteten Anlagen, z. B. in einer Kläranlage, sein. Es entsteht somit das Reinigungsproblem. Bisher ist es bekannt, ein geschlossenes Leitungssystem an der Stelle, an der die Reinigung erfolgen soll, mit einem Unterbrechungsschacht zu versehen, also das geschlossene System an dieser Stelle zu öffnen, und in den Unterbrechungsschacht eine Siebschnecke gemäß der DE-PS 37 16 434 oder eine andere Reinigungseinrichtung einzusetzen. Nachteilig daran ist, daß an dieser Stelle das geschlossene System geöffnet wird, also in ein offenes System übergeht. Weiterhin ist der Bauaufwand, der durch den Unterbrechungsschacht verursacht wird, erheblich.

Andererseits sind Abflußbegrenzer bekannt, wie sie in Rückhalteräumen unterschiedlichster Bauart einsetzbar sind. Diese Abflußbegrenzer stellen praktisch ein schwimmergesteuertes Ventil dar, wobei durch ansteigenden Wasserstand der Abflußbegrenzer mehr oder weniger geschlossen wird. Damit ist es möglich, in Regenrückhaltebecken, Staubecken, Pufferbecken u. dgl. z. B. bei einem Regenereignis große Wassermengen aufzunehmen und die ohnehin überlastete Kläranlage zu entlasten. Nachfolgend kann das Rückhaltebecken dann gezielt mit niedriger Abflußrate entleert werden. Solche Abflußbegrenzer besitzen meist eine aufwendiger und störanfällige Mechanik, um die Bewegung des Schwimmers auf eine ventilkörperartige Platte o. dgl. zu übertragen, mit der ein Abflußquerschnitt verstellt wird. Weiterhin ist an solchen Abflußbegrenzern nachteilig, daß sich insbesondere während der Stauperiode vor den Abflußbegrenzern Schweb- und Sinkstoffe sowie andere Verureinigungen wie Steine und andere Verschmutzungen aufstauen können, so daß die ordnungsgemäße Funktion und die Leichtgängigkeit des Abflußbegrenzers behindert sein kann. Auch werden diese Verunreinigungen in nachfolgende Abflußleitungen oder Kanäle mitgenommen und belasten somit das gesamte weitere Kanalnetz einschließlich nachgeschalteter Anlagen und Einrichtung z. B. einer Kläranlage.

Der Erfindung liegt die Aufgabe zugrunde, eine Vorrichtung der eingangs beschriebenen Art bereitzustellen, die in einem teilweise geschlossenen teilweise offenen Kanalsystem einsetzbar ist und mit der es möglich ist, sowohl eine Reinigungswirkung als auch eine Ventilwirkung zu erreichen.

Erfindungsgemäß wird dies bei der Vorrichtung der eingangs beschriebenen Art dadurch erreicht, daß das Gehäuse der Schneckenfördereinrichtung anströmseitig die Abscheidefläche umschließt und anströmseitig einen Einlaufstutzen übergeht, daß ein sich in der Kompaktierzone bildender Pfropf aus Abscheidegut beim Auftreten von Druck in der Flüssigkeit als Dichtelement für den Abschluß der Förderstrecke nach oben vorgesehen ist, und daß der flüssigkeitsdurchlässigen Abscheidefläche ein flächig ausgebildeter Regulierungskörper zugeordnet ist, der ortsveränderlich zur Abscheidefläche vorgesehen ist, um die Durchtrittsfläche der Abscheidefläche zu verändern und damit eine Durchsatzregulierung zu erreichen. Das Gehäuse der Schneckenfördereinrichtung, welches bei der im Stand der Technik bekannten Vorrichtung oberhalb der Abscheidefläche endet, so daß die Abscheidefläche selbst frei in das Gerinne einragt, wird bei der neuen Vorrichtung nach unten verlängert, so daß es auch die Abscheidefläche bzw. den gesamten Abscheideort umschließt. Damit geht das Gehäuse über die gesamte Vorrichtung durch. Es weist im unteren Bereich einen Einlaufstutzen auf, der über entprechende Anschlußmittel, z. B. eine flanschförmige Verbindung, mit der Auslaßleitung des Beckens verbindbar ist. Der Kanal, an den die Vorrichtung angeschlossen wird, kann insbesondere rechteckigen oder runden Querschnitt aufweisen. Nach oben wird der sich in der Kompaktierzone bildende Pfropf aus Abscheidegut beim Auftreten von Druck in der Flüssigkeit als Dichtelement genutzt, wobei es sich bei dieser Abdichtung nicht um einen hermetischen Abschluß handelt, da das Abscheidegut an dieser Stelle aus dem geschlossenen System herausgeführt werden muß. Außerdem tritt nicht in allen Fällen und zu allen Betriebszuständen auch ein Druck in der Flüssigkeit auf. Dies hängt von der Verlegung des Kanalsystems und von dem Flüssigkeitsstand in den Anschlußelementen, beispielsweise in einem vorgeschalteten Sammelbecken o. dgl., ab. Wenn jedoch ein solcher Druck in der Flüssigkeit auftritt, wird der Pfropf in der Kompaktierzone als ein solches, das Gehäuse nach oben abschließendes Dichtelement genutzt, während im bisherigen Stand der Technik die Kompaktierzone lediglich dazu diente, weitere Flüssigkeit aus dem Abscheidegut auszupressen. Die neue Vorrichtung erbringt sowohl eine Reinigung wie auch eine Mengenregulierung. Dies ist insbesondere dann wichtig, wenn mit Abscheidegut verunreinigte Flüssigkeit beispielsweise aus einem Regenrückhaltebecken mit eingeschränktem Durchsatz gezielt einer Kläranlage zugeführt werden soll. Es wird dann der Regulierungskörper entsprechend verstellt, der relativ zu der flüssigkeitsdurchlässigen Abscheidefläche angeordnet und ortsveränderlich bewegbar ist, so daß bei einer Verschiebung des Regulierungskörpers relativ zur Abscheidefläche die freie Durchtrittsfläche der Abscheidefläche verändert, also vergrößert oder verkleinert wird und somit die Mengenregulierung stattfindet.

Der Regulierungskörper kann eine geschlossene Fläche aufweisen, die die Abscheidefläche umgibt, wobei der Regulierungskörper relativ zur Abscheidefläche axial verstellbar gelagert ist. Der Regulierungskörper kann aus einem zylindermantelförmig gebogenen Blech bestehen, das mit geringem Abstand die Abscheidefläche außen umgibt.

Die Abscheidefläche kann als Lochblech, als Spaltsieb oder auch als Filterfläche ausgebildet sein. Dies richtet sich nach der Art des Abscheideguts und dem jeweiligen Anwendungsfall, bei dem die Vorrichtung eingesetzt wird.

Am Ende der Kompaktierzone hinter dem Pfropf kann eine Gegendruckplatte vorgesehen sein. Diese Gegendruckplatte verstärkt die Abdichtwirkung des Pfropfs in der Kompaktierzone. Mit Hilfe der Gegendruckplatte ist es möglich, auf die Pfropfbildung, auf die Ausdehnung des Pfropfs und auf die Dichtheit des zusammengepreßten Abscheideguts im Bereich des Pfropfs Einfluß zu nehmen.

Die Gegendruckplatte ist zweckmäßig an der Stelle des Übergangs zwischen der Kompaktierzone und einer an das Gehäuse anschließenden Abwurfschurre vorgesehen und kann dabei axial verschiebbar gelagert sein. Die Gegendruckplatte versperrt damit - je nach ihrer axialen Einstellung - den Querschnitt am Übergang zwischen der Kompaktierzone und der Abwurfschurre mehr oder weniger, so daß diese Übergangsstelle mehr oder weniger zugehalten wird. Die axiale Verschiebbarkeit zu Einstell- und/oder Verstellzwecken kann auch eine Anpassung an die Art des Abscheideguts erbringen.

In bevorzugter Ausführungsform ist die Gegendruckplatte als Konuskörper ausgebildet, der auf der durchgehenden Welle der Schneckenfördereinrichtung axial verschiebbar gelagert ist. Der Konuskörper füllt den Zwischenraum zwischen der Welle und dem Gehäuse der Schneckenfördereinrichtung aus und kann seinerseits über Dichtelemente auch bei verschiebbarer Lagerung gegenüber dem Gehäuse und der Welle abgedichtet sein. Im Bereich der Kompaktierzone ist die Welle der Schneckenfördereinrichtung ohne Förderwendel ausgebildet, so daß sich im Anschluß daran auch ein ungehinderter Verschiebeweg für die axiale Verstellung des Konuskörpers ergibt.

Die Gegendruckplatte bzw. der Konuskörper kann unabhängig von seiner axialen Verstellbarkeit axial federnd-nachgiebig gelagert sein, damit er bei auftretenden Hindernissen begrenzt ausweichen kann. Dies ist beispielsweise dann der Fall, wenn Steine oder ähnliches Festgut sich in dem Pfropf in der Kompaktierzone anreichern und ein federnd-nachgiebiges Ausweichen der Gegendruckplatte erfordern, damit sie in den Bereich der Abwurfschurre übertreten können. Damit dient die Gegendruckplatte mit ihrer federnd-nachgiebigen Lagerung gleichzeitig als Sicherheitselement.

Für die Veränderung der Durchtrittsfläche der Abscheidefläche kann ein Antrieb für den Regulierkörper vorgesehen sein, der in Abhängigkeit von der Füllstandshöhe in einem vorgeschalteten Behälter steuerbar ist. Zweckmäßig kann der Antrieb als motorischer Antrieb ausgebildet sein. Auch ein hydraulischer Antrieb ist denkbar.

Die Erfindung wird anhand bevorzugter Ausführungsbeispiele weiter erläutert und beschrieben. Es zeigen:
- Figur 1: eine perspektivische Darstellung der gesamten Vorrichtung in einer ersten Ausführungsform,
- Figur 2: einen Schnitt im oberen Bereich der Vorrichtung und
- Figur 3: einen Schnitt im unteren Bereich der Vorrichtung anhand einer Weiterbildung.

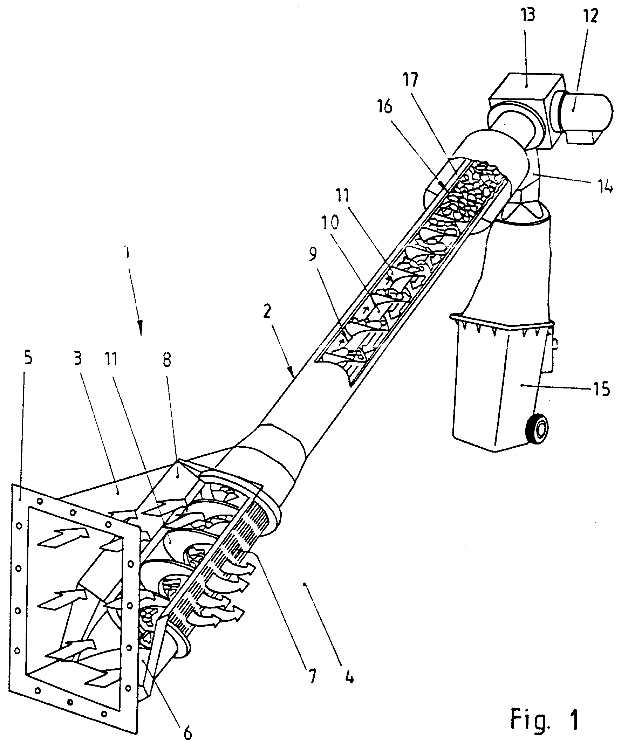

Die in Figur 1 dargestellte Vorrichtung 1 weist ein durchgehendes Gehäuse 2 auf, welches im oberen Teil rohrförmig und im unteren Teil kastenförmig ausgebildet ist. Der untere Teil des Gehäuses 2 bildet einen Einlaufstutzen 3, der mit einem Flansch 5 an den Ablauf eines Pufferbeckens anschließbar ist. An der Ablaufseite 4 ist kein Stutzen vorgesehen. Hier geht das geschlossene System in ein offenes System über, z. B. ein offenes Gerinne. An der Übergangsstelle vom Einlaufstutzen 3 zur Ablaufseite 4 befindet sich eine Abscheidefläche 7, also eine wasserdurchlässige Fläche, die in Form eines Lochsiebs, eines Spaltsiebs, als Rost, als perforierte Fläche oder auch als Filterfläche ausgebildet sein kann. Die Abscheidefläche 7 ist zylindermantelförmig ausgebildet und an der dem Einlaufstutzen 3 zugekehrten Seite offen gestaltet. zu Abdichtzwecken gegenüber dem Gehäuse 2 können Trenn- und Übergangswände 6, 8 vorgesehen sein. Im unteren Bereich können diese trichterförmig gestaltet sein.

In dem Gehäuse 2 und auch relativ zur Abscheidefläche 7 ist eine Schneckenfördereinrichtung 9 mit Welle 10 und Förderwendel 11 angeordnet. Im Bereich der Abscheidefläche 7 ist die Förderwendel 11 wellenlos gestaltet, um den hydraulischen Widerstand zu erniedrigen. Die Förderwendel 11 ist jedoch so gestaltet, daß sie im Bereich der Abscheidefläche 7 an dieser entlangstreicht und das Abscheidegut aufnimmt und nach oben fördert. Für den Antrieb der Welle 10 mit der Förderwendel 11 ist ein Motor 12 und ein Getriebe 13 vorgesehen, die mit dem oberen Ende der Welle 10 in Verbindung stehen. Im oberen Bereich der Schneckenfördereinrichtung 9 geht das Gehäuse 2 in eine Abwurfschurre 14 über, über die das Abscheidegut in einen Container 15 gelangt. Vor und im Bereich der an das Gehäuse 2 anschließenden Abwurfschurre 14 ist eine Kompaktierzone 16 gebildet, die zumindest teilweise förderwendelfrei ausgebildet ist. Die Förderwendel 11 kann beispielsweise nach oben abnehmende Steigung besitzen und dann in gewisser Entfernung von der Abwurfschurre 14 enden, während die Welle 10 durchgehend vorgesehen ist. In der Kompaktierzone 16 wird aus dem Abscheidegut ein Pfropf 17 gebildet, d. h. das Abscheidegut füllt den gesamten Querschnitt aus, wird zusammengepreßt und bildet damit eine Art Dichtung. Gleichzeitig wird das Abscheidegut beim Zusammendrücken zu dem Pfropf 17 entwässert. Je nach den Bedingungen des Rohrleitungssystems bzw. des Kanals, in welchen die Vorrichtung 1 eingebaut wird, kann es vorkommen, daß das gesamte Gehäuse 2 bis zum Pfropf 17 auch mit Flüssigkeit gefüllt ist, die zudem noch unter Druck stehen kann, wenn beispielsweise an die Rohrleitung ein Becken mit einem Wasserstand angeschlossen ist, der die Höhe des Pfropfs 17 überragt. Wenn die Vorrichtung für einen Anwendungsfall vorgesehen ist, bei welchem das Gehäuse 2 über den Pfropf 17 hinaus unter Druck stehen wird oder stehen kann, ist es erforderlich, vor dem Ersteinbau einen Pfropf 17 zu bilden und auch während des sich nach dem Einbau anschließenden Betriebs der Vorrichtung 1 dafür zu sorgen, daß dieser Pfropf 17 - da er ein Dichtelement bildet - niemals verschwindet.

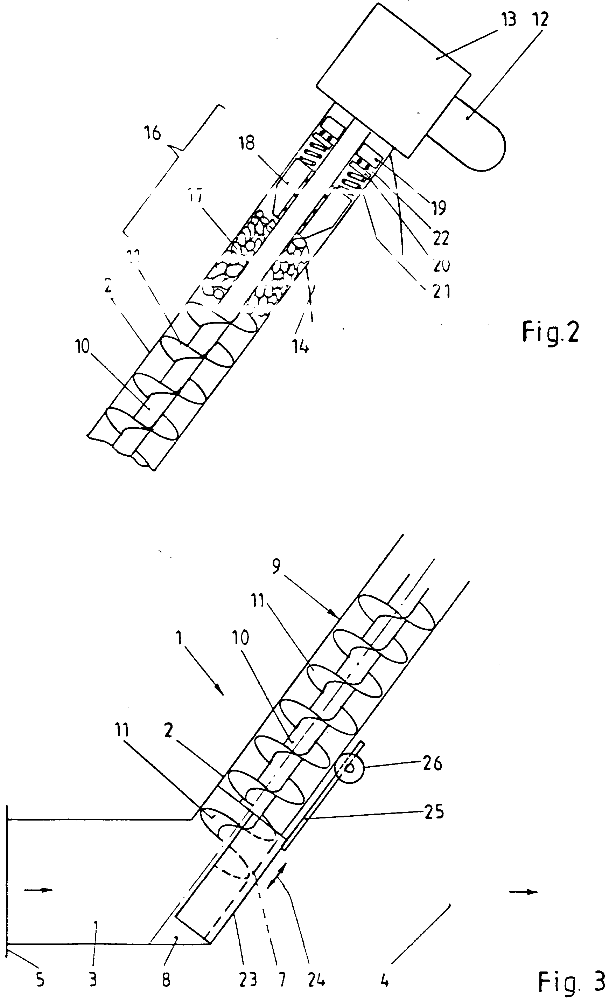

Figur 2 läßt erkennen, daß die Bildung des Pfropfs 17 durch eine Gegendruckplatte 18 verstärkt ist, die gegenüber der Welle 10 wie auch gegenüber dem Gehäuse 2 abgedichtet gelagert ist. Die Gegendruckplatte 18 ist zweckmäßig ortsfest angeordnet und umschließt die Welle 10. Die Gegendruckplatte 18 ist im Bereich der Abwurfschurre 14 gelagert und kann zweckmäßig in Richtung der Achse der Welle 10 verschiebbar oder verstellbar gelagert sein. Auch eine federnd-nachgiebige Lagerung, wie dargestellt, ist zweckmäßig. Hierzu ist eine Mutter 19 z. B. auf einem nicht dargestellten Gewinde auf der Welle 10 verdrehbar angeordnet. Auf der Mutter 19 stützt sich eine Stützscheibe 20 ab, die als Auflager für ein oder mehrere Federn 21 dient, über die die Gegendruckplatte 18 ausweichbar, also axial verschiebbar, gelagert ist. Zwischen Stützscheibe 20 und Mutter 19 kann eine Lagerung 22 vorgesehen sein, beispielsweise in Form eines Kugellagers, damit beim Verdrehen der Mutter 19 die Stützscheibe 20 nicht mitgedreht wird. Die Gegendruckplatte 18 kann so gelagert sein, daß sie sich in einer solchen Ausgangsstellung befindet, daß der Durchtrittsguerschnitt zur Abwurfschurre 14 abgeschlossen ist, wenn kein Pfropf 17 vorhanden ist. Es versteht sich, daß die Gegendruckplatte 18 beim Auftreten des Pfropfs axial in Richtung auf das Getriebe 13 ausweicht, so daß sich der Pfropf 17 dabei aufbauen kann und jeweils ein Teil des Pfropfs 17 in die Abwurfschurre 17 übertreten kann, wobei jedoch die Dichtfunktion des Pfropfs 17 nicht aufgehoben wird. Die Gegendruckplatte 18 kann als Konuskörper ausgebildet sein, um den Übergang des sich von dem Pfropf 17 lösenden Teils des Abscheideguts beim Übertritt in die Abwurfschurre 14 zu begünstigen.

Figur 3 verdeutlicht die Gestaltung der Vorrichtung 1 im unteren Bereich anhand einer besonderen Ausführungsform der Vorrichtung. Die zylindermantelförmige Abscheidefläche 7 ist von einem Regulierungskörper 23 umgeben, der ebenfalls zylindermantelförmig nach Art einer Halbschale ausgebildet ist und die Abscheidefläche 7 auf ihrer Außenseite abdeckt. Der Regulierungskörper 23 erfüllt damit eine Art Ventilfunktion zwischen dem Einlaufstutzen 3 und der Ablaufseite 4. Der Regulierungskörper 23 ist in Richtung eines Doppelpfeils 24 parallel zur Achse der Welle 10 bzw. der Förderwendel 11 verschiebbar gelagert. Zu diesem Zweck greift am Regulierkörper 23 eine Zahnstange 25 an, über die die Verstellung mittels eines Stellmotors 26 erfolgt. In der vollständig geöffneten Stellung befindet sich der Regulierungskörper 23 oben, so daß die gesamte Fläche der Abscheidefläche 7 freigegeben ist. Für den Antrieb des Regulierungskörpers 23 ist der Stellmotor 26 vorgesehen, der auch als hydraulischer Antrieb verwirklicht sein kann. Über nicht dargestellte Führungselemente wird die Bewegung des Regulierungskörpers 23 parallel zu der Achse der Schneckenfördereinrichtung 9 eingehalten. Der Regulierungskörper 23 kann als Blechschale ausgebildet sein. Die Anordnung elastischer Dichtelemente ist meist entbehrlich, da es im allgemeinen nur um eine Mengenregulierung geht und ein vollkommen dichtender Abschluß in vielen Fällen entbehrlich ist.

### Bezugszeichenliste:

- 1: = Vorrichtung
- 2: = Gehäuse
- 3: = Einlaufstutzen
- 4: = Ablaufseite
- 5: = Flansch
- 6: = Übergangswand
- 7: = Abscheidefläche
- 8: = Trenn- und Übergangswand
- 9: = Schneckenfördereinrichtung
- 10: = Welle
- 11: = Förderwendel
- 12: = Motor
- 13: = Getriebe
- 14: = Abwurfschurre
- 15: = Container
- 16: = Kompaktierzone
- 17: = Pfropf
- 18: = Gegendruckplatte
- 19: = Mutter
- 20: = Stützschraube
- 21: = Feder
- 22: = Lagerung
- 23: = Regulierungskörper
- 24: = Doppelpfeil
- 25: = Zahnstange
- 26: = Stellmotor

## Patentansprüche

1. Vorrichtung zum Entfernen von Abscheidegut aus einer Flüssigkeit mit einer zylindermantelförmigen, flüssigkeitsdurchlässigen Abscheidefläche, die zur Ablagerung des Abscheideguts auf ihrer Innenseite anströmseitig auf einem Teil des Umfangs offen ausgebildet ist, und mit einer parallel zur Abscheidefläche angeordneten, zur Abwurfstelle des Abscheideguts führenden, als Schneckenfördereinrichtung mit Gehäuse, Welle und Förderwendel ausgebildeten Förderstrecke für das Abscheidegut, wobei die Förderwendel an der Abscheidefläche entlangstreichend das Abscheidegut abnimmt, nach oben fördert und so die Abscheidefläche immer wieder reinigt sowie am oberen Ende der Förderstrecke eine Kompaktierzone für das Abscheidegut gebildet ist, dadurch gekennzeichnet, daß das Gehäuse (2) der Schneckenfördereinrichtung (9) anströmseitig die Abscheidefläche (7) umschließt und anströmseitig in einen Einlaufstutzen (3) übergeht, daß ein sich in der Kompaktierzone (16) bildender Pfropf (17) aus Abscheidegut beim Auftreten von Druck in der Flüssigkeit als Dichtelement für den Abschluß der Förderstrecke nach oben vorgesehen ist, und daß der flüssiqkeitsdurchlässigen Abscheidefläche (7) ein flächig ausgebildeter Regulierungskörper (23) zuqeordnet ist, der ortsveränderlich zur Abscheidefläche (7) vorgesehen ist, um die Durchtrittsfläche der Abscheidefläche (7) zu verändern und damit eine Durchsatzregulierung zu erzielen.

2. Vorrichtung nach Anspruch 1, dadurch gekennzeichnet, daß der Regulierungskörper (23) eine geschlossene Fläche aufweist, die die Abscheidefläche (7) umgibt, und daß der Regulierungskörper (23) relativ zur Abscheidefläche (7) axial verstellbar gelagert ist.

3. Vorrichtung nach Anspruch 1 oder 2, dadurch gekennzeichnet, daß die Abscheidefläche (7) als Lochblech, Spaltsieb oder Filterfläche ausgebildet ist.

4. Vorrichtung nach einem der Ansprüche 1 bis 3, dadurch gekennzeichnet, daß am Ende der Kompaktierzone (16) hinter dem Pfropf (17) eine Gegendruckplatte (18) vorgesehen ist.

5. Vorrichtung nach Anspruch 4, dadurch gekennzeichnet, daß die Gegendruckplatte (18) an der Stelle des Übergangs zwischen der Kompaktierzone (16) und einer an das Gehäuse (2) anschließenden Abwurfschurre (14) axial verschiebbar gelagert ist.

6. Vorrichtung nach Anspruch 4 oder 5, dadurch gekennzeichnet, daß die Gegendruckplatte (18) als Konuskörper ausgebildet ist.

7. Vorrichtung nach einem oder mehreren der Ansprüche 1 bis 6, dadurch gekennzeichnet, daß die Gegendruckplatte (18) axial federnd-nachgiebig gelagert ist.

8. Vorrichtung nach Anspruch 1 oder 2, dadurch gekennzeichnet, daß für die Durchtrittsflächen der Abscheidefläche (7) ein Antrieb für den Regulierungskörper (23) vorgesehen ist, der in Abhängigkeit von der Füllstandshöhe in einem vorgeschalteten Behälter steuerbar ist.
